# EUROPÄISCHE PATENTSCHRIFT

(11) **EP 2 290 797 B1**
(45) Veröffentlichungstag und Bekanntmachung des Hinweises auf die Patenterteilung: **28.01.2015**
(21) Anmeldenummer: 10183310.1
(22) Anmeldetag: 01.06.2005
(51) Int. Cl.: H02M 7/48, H02J 3/38

(54) **Verfahren zum Umwandeln einer elektrischen Gleichspannung einer Gleichspannungsquelle, insbesondere einer Photovoltaik-Gleichspannungsquelle in eine Wechselspannung**
Method of converting a DC voltage of a DC source, in particular of a photovoltaic DC source, in an AC voltage
Procédé pour convertir une tension continue d'une source de tension continue, en particulier d'une source de tension continue PHOTOVOLTAIQUE, en une tension alternative

(30) Priorität: 25.06.2004 DE 102004030912
(43) Veröffentlichungstag der Anmeldung: 02.03.2011
(62) Teilanmeldung aus: 05011807.4
(73) Patentinhaber: SMA Solar Technology AG, 34266 Niestetal (DE)
(72) Erfinder: Victor, Dr. Matthias, 34266, Niestetal (DE); Bremicker, Sven, 36211, Alheim (DE); Greizer, Frank, 34240, Kaufungen (DE); Hübler, Uwe, 34132, Kassel (DE)
(74) Vertreter: Specht, Peter

(56) Entgegenhaltungen:
- EP-A2- 1 463 188
- DE-A1- 10 221 592
- FEEL-SOON KANG ET AL: "Interface circuit for photovoltaic system based on buck-boost current-source PWM inverter", IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002; [ANNUAL CONFERENCE OF THE IEEE INDUSTRIAL ELECTRONICS SOCIETY], IEEE, NEW YORK,NY, US, Bd. CONF. 28, 5. November 2002 (2002-11-05), Seiten 3257-3261, XP010707605, DOI: 10.1109/IECON.2002.1182920 ISBN: 978-0-7803-7474-4

## Beschreibung

Die Erfindung betrifft ein Verfahren mit den im Oberbegriff des Anspruchs 1 angegebenen Merkmalen.

Die DE 197 32 218 C1 beschreibt eine transformatorlose Wechselrichter-Schaltungsanordnung mit einem invertierenden hoch-/tiefsetzenden Wandlerschaltkreis und einem nichtinvertierenden Wandlerschaltkreis. Derartige Wechselrichter werden zur Ankopplung von Photovoltaikanlagen verwendet. Die Schaltung weist eine potentialfeste Direktverbindung auf, d.h. eine auf festem Potential bleibende Leiterverbindung auf. Zwischen einem der beiden Gleichspannungsanschlüsse und einem der Wechselspannungsanschlüsse ist es bei Bedarf möglich, diese Direktverbindung als Nuilleiter des Systems zu verwenden und daran beispielsweise den Minusanschluss der Gleichspannungsquelle anzukoppeln, was zur Vermeidung von EMV-Problemen von großem Vorteil ist. Durch die Schaltung soll eine Bereitstellung eines transformatorlosen Wechselrichters mit einem geringen Gewicht und Bauvolumen aber auch mit hoher Personensicherheit und geringen EMV-Problemen möglich sein.

Eine Wechselrichterschaltung mit einer Halbleiterbrücke, einem Solargenerator und einem zwischen Solargenerator und Halbleiterbrücke geschalteten Schaltelement ist aus der DE 103 12 921 A1 bekannt. Diese Schaltungsanordnung ist derart ausgebildet, dass bei Überschreitung einer definierten Gleichspannung des Solargenerators das Schaltelement geöffnet und bei Unterschreitung der Generatorspannung das Schaltelement eingeschaltet wird, so dass der für die Wechselrichterschaltung oder den Verbraucher mögliche Eingangsspannungsbereich erhöht wird. Eine Vermeidung hochfrequenter Spannungen bzw. das Beseitigen von EMV-Problemen wird durch die Ausbildung der Schaltung nicht erreicht.

Die DE 102 21 592 A1 offenbart einen transformatorlosen Wechselrichter mit einer Brückenschaltung. Bei dieser Schaltung sind zwei getrennte, elektrische Verbindungspfade vorgesehen, in denen jeweils ein Schalter sowie in Reihe geschaltete Gleichrichterdioden vorgesehen sind. Diese sind in den einzelnen Verbindungspfaden in Durchlassrichtung geschaltet. Im Gegensatz zu einer symmetrischen Taktung wird durch diese Schaltung ein Stromrippel im Ausgangsstrom deutlich reduziert. Die zusätzlichen Freilaufdioden erlauben eine ohmsche Entkopplung zwischen einem Solargenerator und den Wechselspannungsanschlüssen. Dadurch werden hochfrequente Spannungssprünge an den Anschlussleitungen des Generators vermieden, wodurch das EMV-Verhalten verbessert wird.

Bekannt ist es darüber hinaus, für transformatorlose Photovoltaik-Wechselrichter eine H-Brückenschaltung mit vier Halbleiterschaltern einzusetzen, die so abwechselnd geschaltet werden, dass aus der anliegenden Gleichspannung zwischen den Abzweigen der Brückenhälften eine Wechselspannung entsteht. Die Schaltelemente werden zudem symmetrisch getaktet. Hierbei wird ein Oberschalter einer Brückenhälfte zusammen mit einem anderen Unterschalter der anderen Brückenhälfte synchron mit einer hohen Taktfrequenz pulsweitenmoduliert getaktet.

Zur Reduzierung von Oberschwingungen der so erzeugten Wechselspannung werden Drosseln eingesetzt. Damit die Oberschwingung in der Wechselspannung gering gehalten werden, müssen die Drosseln relativ groß dimensioniert werden. Bei dieser Lösung ergeben sich aber relativ hohe Ummagnetisierungsverluste in den Drosseln, so dass der Wirkungsgrad der Schaltung reduziert wird.

Außerdem entstehen weitere Verluste, weil gleichzeitig zwei Schaltelemente ein- und abgeschaltet werden und im Freilaufzustand der Strom über zwei Freilaufdioden in den Gleichspannungszwischenkreis fließt. Die Gleichspannung im Zwischenkreis wirkt im Freilaufzustand als Gegenspannung, was einen höheren Stromrippel und damit eine erhöhte Verlustleistung zur Folge hat.

Um diese Verluste zu reduzieren, ist es bekannt, die Brücke asymmetrisch zu takten. Das heißt, dass während beispielsweise die oberen Schalter mit Netzfrequenz angesteuert werden, die unteren Schalter mit der hohen Taktfrequenz angesteuert werden. Damit entfällt im Freilaufzustand die Gegenspannung aus dem Zwischenkreis, da der Strom nur über eine Diode und einen Schalter kommutiert. Dies führt zu einem geringeren Stromrippel und zu einer Reduzierung der Verluste. Allerdings ergeben sich durch diese asymmetrische Ansteuerung an den Klemmen des Photovoltaikgenerators hochfrequente Potentialschwankungen, die das EMV-Verhalten des Generators verschlechtern.

Eine Maßnahme, die die Nachteile beider Lösungen verhindert, ist in der Druckschrift DE102 21 592 A1 gezeigt und beschrieben. Hierbei ist vorgesehen, dass zusätzlich zwei Verbindungspfade zwischen den Ausgängen einer Brückenschaltung bzw. einer H-Brücke vorhanden sind. In den Verbindungspfaden liegen vier Halbleiter-Bauelemente, und zwar jeweils ein weiteres Schaltelement mit zugehöriger Treiberstufe und eine in Reihe geschaltete Diode.

Eine Vermeidung beider Nachteile wird also durch einen komplexeren Schaltungsaufbau aufgrund der wesentlich höheren Anzahl an Bauelementen erkauft, wodurch die Zuverlässigkeit der Schaltung sinkt und der Materialpreis steigt.

Der vorliegenden Erfindung liegt die Aufgabe zugrunde, ein Verfahren der gattungsgemäßen Art anzugeben, bei dem einerseits hochfrequente Spannungsanteile an den Anschlüssen des Generators vermieden werden, und andererseits ein einfacher Schaltungsaufbau in veriustarmer Ausführung und somit hohem Wirkungsgrad gegeben ist. Darüber hinaus sollen die Materialkosten reduziert und die Zuverlässigkeit erhöht werden.

Diese Aufgabe wird dadurch gelöst, dass der Wechselspannungskreis während der Freilaufphasen vom Gleichspannungskreis mittels eines im Gleichspannungskreis zusätzlich angeordneten Schaltelemente entkoppelt wird. Erfindungsgemäß fließt in der Brückenschaltung ein Freilaufstrom über die inneren Elemente der Brücke, so dass durch den über den zusätzlichen geöffneten Schalter entkoppelten Zustand der beiden Kreise keine hochfrequenten, durch Taktvorgänge erzeugten Störungen im Gleichspannungskreis auftreten.

Durch das erfindungsgemäße Verfahren werden in einfacher Weise und mit nur einem zusätzlichen Bauteil (gegenüber einer einfachen H-Brücke mit vier Schaltelementen und vier Freilaufdioden) hochfrequente Spannungsanteile auf den Anschlüssen des Gleichspannungszwischenkreises vermieden. Die Komplexität der Schaltung sinkt gegenüber einer H-Brücke mit zusätzlichen Verbindungspfaden (nach DE1 02 21 592A1 mit sechs Schaltelementen und sechs Freilaufdioden), da also nur ein Halbleiter-Schaltelement mit zugehöriger Ansteuereinheit anstelle von zwei zusätzlichen Halbleiter-Schaltelementen einschließlich Ansteuereinheiten und zwei zusätzliche Dioden erforderlich ist (insgesamt nur fünf Schaltelemente mit fünf Freilaufdioden). Die Zusatzkosten und die Ausfallwahrscheinlichkeit werden dadurch minimiert.

Ein Ansteuersignal für das zusätzliche Schaltelement kann außerdem bei der erfindungsgemäßen Lösung ohne zusätzlichen Aufwand für eine Ansteuerschaltung durch eine logische Verknüpfung aus Ansteuersignalen von beispielsweise den unteren Schaltelementen der H-Brücke gewonnen werden.

Durch das erfindungsgemäße Verfahren ist in vorteilhafter Weise ein asymmetrischer Betrieb ohne hochfrequente Störungen möglich, insbesondere wenn nach einer vorteilhaften Ausführungsform der Erfindung die Brückenschaltung derart angesteuert wird, dass das zusätzliche, im Gleichspannungskreis liegende Schaltelement in einer Halbwelle synchron mit einem Unterschalter der einen Brückenhälfte getaktet wird, während es bei der anderen Halbwelle synchron mit einem Unterschalter der anderen Brückenhälfte getaktet wird. Der Zusatzschalter wird demnach jeweils nur mit einem einzigen Schalter gleichzeitig getaktet.

Durch den asymmetrischen Betrieb werden Verluste minimiert und der Wirkungsgrad der Schaltung verbessert. Das erfindungsgemäße Verfahren nach dieser vorteilhaften Ausführungsform verbindet also mit minimalem Bauteilaufwand die Vorteile einer einfachen H-Brücken-Schaltung mit unsymmetrischer Taktung, die einen guten Wirkungsgrad aufweist, mit den Vorteilen einer einfachen H-Brücken-Schaltung mit symmetrischer Taktung, die hochfrequente Signale an den Generatorklemmen vermeidet.

Ebenso wie bei der asymmetrischen Taktung tritt im Gegensatz zu der symmetrischen Taktung ein Zustand einer Nullspannung ein, da die Spannung an den Ausgangsklemmen des Wechselrichters zwischen +U, Null, -U hin und her geschaltet wird. Dadurch werden die Ummagnetisierungsverluste in den Netzdrosseln reduziert und insbesondere auch der Teillastwirkungsgrad verbessert.

Wenn die entsprechenden Schaltelemente der Brückenschaltungen im kHz-Bereich getaktet werden, spielen die Durchlassverluste gegenüber den Schaltverlusten eine untergeordnete Rolle, so dass der Wirkungsgrad durch das zusätzliche Schaltelement nahezu gleich der H-Brücke mit zusätzlichen Verbindungspfaden zwischen den Ausgängen der Brückenschaltung ist.

Da durch die Erfindung einerseits eine Spannung an den Wechselspannungsklemmen praktisch zwischen einem positiven Spannungspotential, Null und einem negativen Spannungspotential hin und her geschaltet wird und andererseits durch eine pulsweitenmodulierte Taktung eine Anpassung an die Last möglich ist, ist eine Anwendung der Erfindung beispielsweise bei einem transformatorlosen Photovoltaik-Wechselrichter möglich.

Dadurch dass eine antiparallele Diode des Zusatzschalters vorgesehen ist, die nicht als Freilaufdiode wirkt, bzw. nicht im Eingriff ist, sowie beispielsweise die unteren Freilaufdioden der getakteten Schalter im Normalfall ebenfalls nicht im Eingriff sind, besteht die Möglichkeit einer Optimierung der verwendeten Halbleiter. Dadurch können Halbleiterbauelemente verwendet werden, die zwar ungünstige Diodeneigenschaften aufweisen, andererseits aber gute Schalteigenschaften und niedrige Durchlassverluste aufweisen. Dadurch können für die zu taktenden Schaltelemente insbesondere neueste MOSFET- Halbleiterbauelemente eingesetzt werden, die eine weitere Optimierung hinsichtlich Wirkungsgrad und Kostenreduktion ermöglichen.

Weitere Weiterbildungen der Erfindung sind in den Unteransprüchen genannt.

Die Erfindung sowie Vorteile derselben wird nun anhand der Zeichnungen erläutert.

Es zeigen:
- Fig. 1: eine erfindungsgemäße Schaltungsanordnung eines Wechselrichters
- Fig.2: ein Schaltbild mit einem Stromverlauf während einer positiven Halbwelle
- Fig.3: ein Schaltbild mit einem Stromverlauf während einer negativen Halbwelle, und
- Fig.4: ein Schaltbild mit einem Stromverlauf im entkoppelten Zustand.

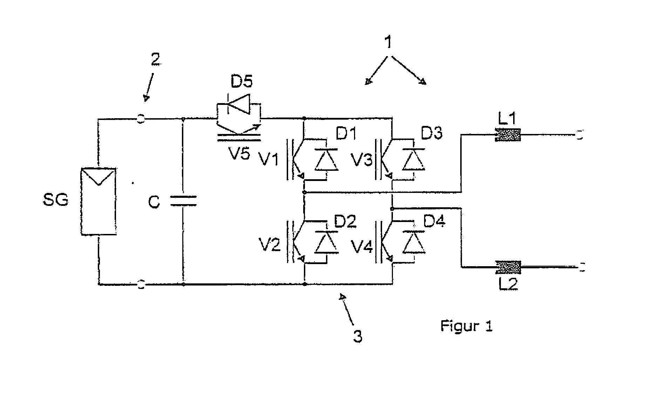

Die Figur 1 zeigt einen erfindungsgemäßen Wechselrichter 1 mit einem Solargenerator SG bzw. einem Photovoltaikgenerator. Diese Schaltung erlaubt ein Verfahren zum Umwandeln einer elektrischen Gleichspannung einer Photovoltalk-Gleichspannungsquelle in eine Wechselspannung mit einer Frequenz von zum Beispiel 50Hz.

An den Eingangsklemmen 2 des Wechselrichters 1 ist ein Glättungskondensator C bzw. Speicherkondensator parallel zum Solargenerator SG geschaltet. Der Solargenerator SG mit dem Kondensator C bildet einen Gleichspannungszwischenkreis bzw. DC-Kreis. Der Wechselrichter besitzt eine H-Brücke 3 mit vier Halbleiter-Schaltelementen V1-V4 und einen Zusatzschalter V5. Parallel zu den Schaltelementen V1 - V5 sind Freilaufdioden D1-D5 geschaltet. An dem Brückenabzweig liegen im Wechselspannungsteil zwei Drosseln L1 und L2.

Die oberen Schaltelemente V1 und V3 werden mit Netzfrequenz zum Beispiel 50Hz angesteuert, während die unteren Schaltelemente V2 und V4 mit einer hohen Taktfrequenz im kHz-Bereich, zum Beispiel 16 kHz, pulsweitenmoduliert getaktet werden.

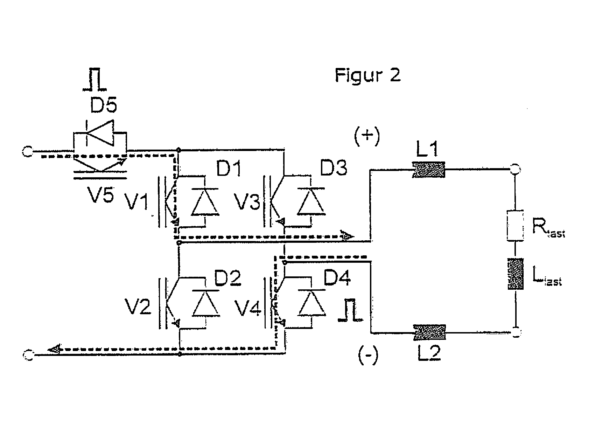

Das zusätzliche Halbleiter-Schaltelement V5, das insbesondere auch als MOSFET-Bauelement ausgeführt sein kann, wird zusammen mit den unteren Schaltelementen V2 bzw. V4 mit der hohen Taktfrequenz, zum Beispiel 16 kHz, getaktet. Das Schaltelement V5 wird also in der einen Halbwelle der Netzspannung, in der das Schaltelement V1 eingeschaltet ist, synchron und pulsweitenmoduliert mit dem Schaltelement V4 getaktet, wie Fig.2 zeigt. Der Laststromaufbau erfolgt dann über die Schaltelement V5, V1 und V4. Werden die hochfrequent taktenden Halbleiterschalter V5 und V4 synchron ausgeschaltet, so kommutiert der Laststrom in einen Freilaufpfad bestehend aus V1 und der zu V3 antiparallele Diode D3.

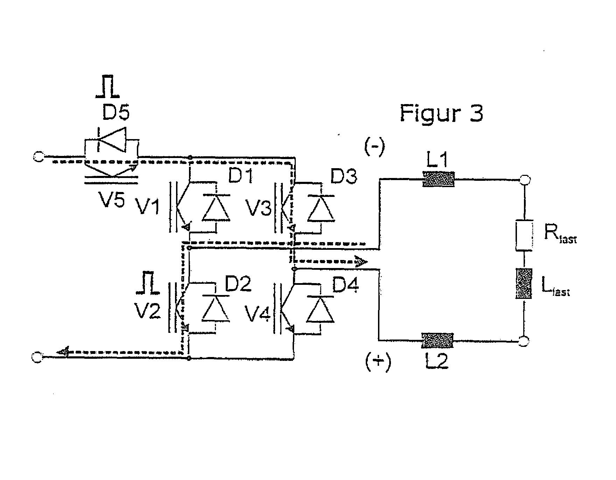

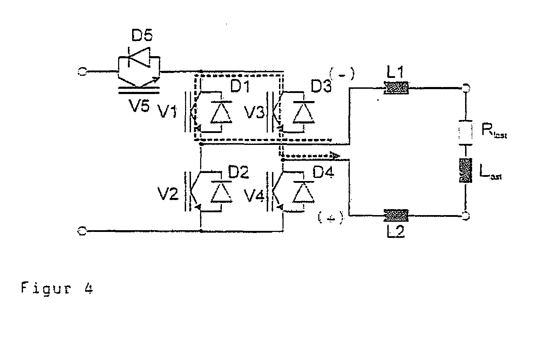

Wie Fig. 3 veranschaulicht, wird in der anderen Halbwelle der Netzspannung (negative Halbwelle), in dem das Schaltelement V3 eingeschaltet ist, das Schaltelement V5 synchron und pulsweitenmoduliert mit dem Schaltelement V2 getaktet. Der Laststromaufbau erfolgt dann über die Schaltelemente V5, V3 und V2. Werden die mit hoher Frequenz taktenden Schaltelemente V5 und V2 synchron ausgeschaltet, dann kommutiert der Laststrom auf die parallele Freilaufdiode D1 des Schaltelementes V1, wie Fig. 4 zeigt.

Dadurch wird erfindungsgemäß mittels eines im Gleichspannungskreis angeordneten Schaltelementes V5 der Lastkreis von den Anschlüssen des Generators entkoppelt, wodurch hochfrequente Spannungskomponenten auf diesen Anschlussleitungen vermieden werden. Das Schaltelement V5 dient demnach als zusätzlicher Entkoppelschalter des einen Gleichspannungsanschlusses gegenüber dem Wechselspannungskreis. Der andere Gleichspannungsanschluss ist gleichsam über die Schalter V2 bzw. V4 von dem Wechselspannungskreis entkoppelt.

Hierbei ist es wichtig, dass sich die Spannung über den Schaltelementen V5 und V2 bzw. V4 symmetrisch aufteilt. Daher sind vorzugsweise Schaltelement bzw. Diodenelement mit gleichen Eigenschaften einzusetzen.

Zusätzlich wird durch diesen Freilauf der Stromrippel und damit die Ummagnetisierungsverluste in den Netzdrosseln L1 und L2 reduziert.

Durch diese Erfindung wird in einfacher Weise ein verlustarmer, transformatorloser und kostenoptimierter Wechselrichter geschaffen, der keine hochfrequente Störungen im Gleichspannungskreis verursacht.

Geschaffen wird auch ein vorteilhaftes Verfahren zum Umwandeln einer elektrischen Gleichspannung einer Gleichspannungsquelle, insbesondere einer Photovoltaik-Gleichspannungsquelle in eine Wechselspannung mit einer Frequenz durch eine Schaltelemente V1 - V4 und Freilaufelemente D1 - D4 aufweisenden Brückenschaltung, wobei die Schaltelemente V1 - V4 einerseits mit der Netzfrequenz angesteuert werden und andererseits mit einer hohen Taktfrequenz getaktet werden, wobei ein Gleichspannungskreis, ein Wechselspannungskreis und mehrere Freilaufphasen vorhanden sind und wobei während der Freilaufphase der Wechselspannungskreis vom Gleichspannungskreis mittels eines im Gleichspannungskreis angeordneten Schaltelementes entkoppelt wird und wobei in der Brückenschaltung im entkoppelten Zustand ein Freilaufstrom durch eines der Freilaufelemente D1 bzw. D3 fließt.

Es ist ferner vorteilhaft, wenn die Schaltelemente V1 bis V4 der Brückenschaltung derart asymmetrisch angesteuert werden, dass ein Schaltelement V1 bzw. V3 einer Brückenhälfte durch die Frequenz, insbesondere durch die Netzfrequenz angesteuert wird, während ein Schaltelement (V2 - V4) einer anderen Brückenhälfte mit der Taktfrequenz getaktet wird.

Vorteilhaft erfolgt ferner nach einer weiteren Variante des Verfahrens eine Reduzierung von Oberschwingungen durch zwei in Reihe und an unterschiedlichen Brückenabgriffen angeordneten Drosseln L1, L2 im Wechselspannungskreis

Es ist ferner nach einer weiteren Variante eine Anwendung der Verfahrens bei einem transformatorlosen Photovoltaik-Wechselrichter 1 vorteilhaft.

Vorteilhaft werden ferner nach einer weiteren Variante des Verfahrens die entsprechenden Schaltelemente (V2, V4, V5) der Brückenschaltung im kHz-Bereich getaktet.

Besonders vorteilhaft werden ferner nach einer weiteren Variante des Verfahrens die entsprechenden Schaltelemente (V2, V4, V5) der Brückenschaltung pulsweitenmoduliert getaktet.

Vorteilhaft wird ferner nach einer weiteren Variante des Verfahrens das zusätzliche, im Gleichspannungskreis liegende zusätzliche Schaltelement V5 in einer Halbwelle synchron mit einem getakteten Schaltelement V2 getaktet, während es bei der anderen Halbwelle synchron mit einem anderen Schaltelement V4 getaktet wird.

Geschaffen wird zudem eine Schaltungsanordnung zur Durchführung des Verfahrens insbesondere der vorstehend beschriebenen Art mit einer Brückenschaltung und dem zusätzlichen Schaltelement V5. Dieses zusätzliche Schaltelement kann vorteilhaft mit einer antiparallelen Diode D5 versehen sein.

Die Schaltelemente der Brückenschaltung (V1 - V5), insbesondere nur die zu taktenden Schaltelemente (V2, V4) und das zusätzliche Schaltelement (V5) werden vorzugsweise vorteilhaft als MOSFET-Halbleiterbauelemente ausgebildet.

Die zuvor beschriebene Schaltungsanordnung eignet sich insbesondere für einen Wechselrichter, insbesondere Photovoltaikwechselrichter mit einer transformatorlosen Ausbildung.

### Bezugszeichenliste:

- 1: Wechselrichter
- 2: Eingangsklemmen
- 3: Brücke

- SG: Solargenerator

- V1-V4: Schaltelemente der Brückenschaltung
- D1-D4: Freilaufelemente der Brückenschaltung
- D5: Diode

- V5: Entkoppelschalter (Schaltelement)
- C: Glättungskondensator
- L1-L2: Netzdrosseln

- R_{Last}: Lastwiderstand
- L_{Last}: Lastinduktivität

## Patentansprüche

1. Verfahren zum Einspeisen einer elektrischen Gleichspannung einer Gleichspannungsquelle, insbesondere einer Photovoltaik-Gleichspannungsquelle, in ein Wechselspannungsnetz mit Hilfe einer Brückenschaltung (3), die zwei Brückenhälften mit jeweils einem oberen Schalter (V1, V3) und einem unteren Schalter (V2, V4) aufweist, wobei die oberen Schalter (V1, V3) beider Brückenhälften über einen zusätzlichen Schalter (V5) mit der Gleichspannungsquelle schaltbar verbunden sind, umfassend:
- Schließen eines der oberen Schalter (V1, V3) während einer Halbwelle des Wechselspannungsnetzes und Schließen des jeweils anderen oberen Schalters (V1, V3) während einer folgenden Halbwelle;
- getaktetes Schalten jeweils des unteren Schalters (V2, V4) derjenigen Brückenhälfte, deren oberer Schalter (V3, V1) in der betroffenen Halbwelle geöffnet ist;
**dadurch gekennzeichnet, dass**
der zusätzliche Schalter (V5) synchron mit dem in der betroffenen Halbwelle getaktet schaltenden unteren Schalter (V2, V4) geschaltet wird.

2. Verfahren nach Anspruch 1, **dadurch gekennzeichnet, dass** eine Reduzierung von Oberschwingungen bei der Einspeisung in das Wechselspannungsnetz über mindestens eine Drossel (L1, L2) erfolgt.

3. Verfahren nach einem der vorangehenden Ansprüche, **dadurch gekennzeichnet, dass** das getaktete Schalten mit einer Frequenz im kHz-Bereich, insbesondere mit einer Frequenz von ungefähr 16 kHz erfolgt.

4. Verfahren nach einem der vorangehenden Ansprüche, **dadurch gekennzeichnet, dass** das getaktete Schalten ein pulsweitenmoduliertes Schalten ist.

5. Verfahren nach einem der vorangehenden Ansprüche, **dadurch gekennzeichnet, dass** während einer Halbwelle jeweils einer der oberen Schalter (V1, V3) dauerhaft geschlossen, und der andere obere Schalter (V3, V1) dauerhaft geöffnet ist.

6. Verfahren nach einem der vorangehenden Ansprüche, **dadurch gekennzeichnet, dass** während eines Zeitabschnittes, zu dem die getaktet geschalteten Schalter (V5; V2, V4) geöffnet sind, eine Kommutierung eines Laststromes auf einen Freilaufpfad erfolgt, der den zu diesem Zeitabschnitt geschlossenen oberen Schalter (V1, V3) und eine dem jeweils anderen oberen Schalter (V3, V1) parallel verbundene Freilaufdiode (D3, D1) umfasst.

7. Verfahren nach Anspruch 6, **dadurch gekennzeichnet, dass** während des Zeitabschnittes eine Entkopplung des Wechselspannungsnetzes von der Gleichspannungsquelle erfolgt.

8. Verfahren nach einem der vorangehenden Ansprüche, **dadurch gekennzeichnet, dass** das synchrone Schalten des zusätzlichen Schalters (V5) mittels einer logischen Verknüpfung von Ansteuersignalen der oberen Schalter (V1, V3) und der unteren Schalter (V2, V4) der Brückenschaltung erfolgt.

9. Wechselrichter zum Einspeisen einer elektrischen Gleichspannung einer Gleichspannungsquelle, insbesondere einer Photovoltaik-Gleichspannungsquelle, in ein Wechselspannungsnetz, umfassend:
- eine Brückenschaltung (3), die zwei Brückenhälften mit jeweils einem oberen Schalter (V1, V3) und einem unteren Schalter (V2, V4) aufweist, wobei die oberen Schalter (V1, V3) beider Brückenhälften über einen zusätzlichen Schalter (V5) mit der Gleichspannungsquelle schaltbar verbunden sind,
- eine erste Ansteuerschaltung, die für ein Schließen eines der oberen Schalter (V1, V3) während einer Halbwelle des Wechselspannungsnetzes und ein Schließen des jeweils anderen oberen Schalters (V1, V3) während einer folgenden Halbwelle eingerichtet ist;
- eine zweite Ansteuerschaltung, die für ein getaktetes Schalten jeweils des unteren Schalters (V2, V4) derjenigen Brückenhälfte eingerichtet ist, deren oberer Schalter (V3, V1) in der betroffenen Halbwelle geöffnet ist;
**dadurch gekennzeichnet, dass**
der zusätzliche Schalter (V5) mit einer dritten Ansteuerschaltung gekoppelt ist, die zum synchronen Schalten mit dem in der betroffenen Halbwelle getaktet schaltenden unteren Schalter (V2, V4) eingerichtet ist.

10. Wechselrichter nach Anspruch 9, **dadurch gekennzeichnet, dass** ein Brückenabzweig der Brückenschaltung (3) mindestens eine Drossel (L1, L2) aufweist.

11. Wechselrichter nach einem der Ansprüche 9 und 10, **dadurch gekennzeichnet, dass** die Schalter (V1, V2, V3, V4) der Brückenschaltung als MOSFET-Halbleiterbauelemente ausgebildet sind.

12. Wechselrichter nach einem der Ansprüche 9 bis 11, **dadurch gekennzeichnet, dass** der zusätzliche Schalter (V5) als MOSFET-Halbleiterbauelemente ausgebildet ist.

13. Wechselrichter nach einem der Ansprüche 9 bis 12, **dadurch gekennzeichnet, dass** die dritte Ansteuerschaltung zur Erzeugung von Ansteuersignalen über eine logische Verknüpfung von Ansteuersignalen der ersten Ansteuerschaltung und der zweiten Ansteuerschaltung eingerichtet ist.

14. Wechselrichter nach einem der Ansprüche 9 bis 12, **dadurch gekennzeichnet, dass** die dritte Ansteuerschaltung zur Erzeugung von Ansteuersignalen über eine logische Verknüpfung von Ansteuersignalen der zweiten Ansteuerschaltung eingerichtet ist.

15. Wechselrichter nach einem der Ansprüche 9 bis 12, **dadurch gekennzeichnet, dass** der Wechselrichter zur transformatorlosen Einspeisung in das Wechselspannungsnetz ausgebildet ist.

## Claims

1. Method for feeding a DC electrical voltage of a DC voltage source, in particular a photovoltaic DC voltage source, into an AC voltage power supply system using a bridge circuit (3) which has two bridge halves with in each case one upper switch (V1, V3) and one lower switch (V2, V4), wherein the upper switches (V1, V3) of the two bridge halves are switchably connected to the DC voltage source via an additional switch (V5), said method comprising:
- closing one of the upper switches (V1, V3) during one half-cycle of the AC voltage power supply system and closing the respective other upper switch (V1, V3) during a successive half-cycle;
- switching in a clocked manner in each case the lower switch (V2, V4) of that bridge half the upper switch (V3, V1) of which is open during the half-cycle in question;
**characterized in that**
the additional switch (V5) is switched synchronously with the lower switch (V2, V4) which is switched in a clocked manner during the half-cycle in question.

2. Method according to Claim 1, **characterized in that** a reduction in harmonics in the case of feeding into the AC voltage power supply system takes place via at least one inductor (L1, L2).

3. Method according to either of the preceding claims, **characterized in that** the clocked switching is done at a frequency in the kHz range, in particular at a frequency of approximately 16 kHz.

4. Method according to any of the preceding claims, **characterized in that** the clocked switching is pulse-width-modulated switching.

5. Method according to any of the preceding claims, **characterized in that**, during one half-cycle, in each case one of the upper switches (V1, V3) is permanently closed and the other upper switch (V3, V1) is permanently open.

6. Method according to any of the preceding claims, **characterized in that**, during one time period for which the switches (V5; V2, V4) which are switched in a clocked manner are open, commutation of a load current onto a freewheeling path takes place, which freewheeling path comprises the upper switch (V1, V3) which is closed at this point in time and a freewheeling diode (D3, D1) which is connected in parallel with the respective other upper switch (V3, V1).

7. Method according to Claim 6, **characterized in that** decoupling of the AC voltage power supply system from the DC voltage source takes place during the time period.

8. Method according to any of the preceding claims, **characterized in that** the synchronous switching of the additional switch (V5) is done by means of a logic operation of drive signals of the upper switches (V1, V3) and the lower switches (V2, V4) of the bridge circuit.

9. Inverter for feeding electrical DC voltage of a DC voltage source, in particular a photovoltaic DC voltage source, into an AC voltage power supply system, comprising:
- a bridge circuit (3) which has two bridge halves with in each case one upper switch (V1, V3) and one lower switch (V2, V4), wherein the upper switches (V1, V3) of the two bridge halves are switchably connected to the DC voltage source via an additional switch (V5),
- a first drive circuit which is set up to close one of the upper switches (V1, V3) during one half-cycle of the AC voltage power supply system and to close the respective other upper switch (V1, V3) during a successive half-cycle;
- a second drive circuit which is set up to switch in a clocked manner in each case the lower switch (V2, V4) of that bridge half the upper switch (V3, V1) of which is open during the half-cycle in question;
**characterized in that**
the additional switch (V5) is coupled to a third drive circuit which is set up for synchronous switching with the lower switch (V2, V4) which is switched in a clocked manner during the half-cycle in question.

10. Inverter according to Claim 9, **characterized in that** a bridge branch of the bridge circuit (3) has at least one inductor (L1, L2).

11. Inverter according to either of Claims 9 and 10, **characterized in that** the switches (V1, V2, V3, V4) of the bridge circuit are designed as MOSFET semiconductor components.

12. Inverter according to any of Claims 9 to 11, **characterized in that** the additional switch (V5) is designed as MOSFET semiconductor components.

13. Inverter according to any of Claims 9 to 12, **characterized in that** the third drive circuit is set up to generate drive signals via a logic operation of drive signals of the first drive circuit and the second drive circuit.

14. Inverter according to any of Claims 9 to 12, **characterized in that** the third drive circuit is set up to generate drive signals via a logic operation of drive signals of the second drive circuit.

15. Inverter according to any of Claims 9 to 12, **characterized in that** the inverter is designed for transformerless feeding into the AC voltage power supply system.

## Revendications

1. Procédé permettant d'alimenter en une tension électrique continue d'une source de tension continue en particulier d'une source de tension continue photovoltaïque un réseau de tension alternative à l'aide d'un montage en pont (3) qui comporte deux demi-ponts avec chacun un commutateur supérieur (V1, V3) et un commutateur inférieur (V2, V4), les commutateurs supérieurs (V1, V3) des deux demi-ponts pouvant être reliés de façon commutable par l'intermédiaire d'un commutateur supplémentaire (V5) avec la source de tension continue, comprenant les étapes consistant à :
- fermer l'un des commutateurs supérieurs (V1, V3) pendant une demi-onde du réseau de tension alternative et fermer l'autre commutateur supérieur respectif (V1, V3) pendant une demi-onde suivante,
- commuter respectivement de manière synchronisée le commutateur inférieur (V2, V4) du demi-pont dont le commutateur supérieur (V3, V1) est ouvert dans la demi-onde concernée,
**caractérisé en ce que**
le commutateur supplémentaire (V5) est commuté en synchronisme avec le commutateur inférieur (V2,V4) se commutant de manière synchronisée dans la demi-onde concernée.

2. Procédé conforme à la revendication 1,
**caractérisée en ce que**
une réduction d'harmoniques est effectuée par l'intermédiaire d'au moins un étranglement (L1, L2) lors de l'alimentation dans le réseau de tension alternative.

3. Procédé conforme à une des revendications précédentes,
**caractérisé en ce que**
la commutation synchronisée est effectuée à une fréquence dans la plage des kHz, en particulier à une fréquence d'environ 16 kHz.

4. Procédé conforme à une des revendications précédentes,
**caractérisé en ce que**
la commutation synchronisée est une commutation à largeur d'impulsions modulée.

5. Procédé conforme à une des revendications précédentes,
**caractérisé en ce que**
pendant une demi-onde respectivement l'un des commutateurs supérieurs (V1, V3) est fermé en permanence tandis que l'autre commutateur supérieur (V3, V1) est ouvert en permanence.

6. Procédé conforme à une des revendications précédentes,
**caractérisé en ce que**
pendant un intervalle de temps dans lequel les commutateurs (V5, V2, V4) commutés de manière synchronisée sont ouverts, on effectue une commutation d'un courant de charge sur un chemin de roue libre qui comprend le commutateur supérieur (V1, V3) qui est fermé pendant cet intervalle de temps et une diode de roue libre (D3, D1) branchée en parallèle sur l'autre commutateur supérieur respectif (V3, V1).

7. Procédé conforme à la revendication 6,
**caractérisé en ce que**
pendant l'intervalle de temps on effectue un découplage du réseau de tension alternative de la source de tension continue.

8. Procédé conforme à l'une des revendications précédentes,
**caractérisé en ce que**
la commutation synchrone du commutateur supplémentaire (V5) est effectuée au moyen d'une combinaison logique de signaux de commande du commutateur supérieur (V1, V3) et du commutateur inférieur (V2, V4) du montage en pont.

9. Onduleur pour alimenter en une tension électrique continue d'une source de tension continue, en particulier d'une source de tension continue photovoltaïque un réseau de tension alternative comprenant :
- un montage en pont (3) comprenant deux demis-pont comportant chacun un commutateur supérieur (V1, V3) et un commutateur inférieur (V2, V4), le commutateur supérieur (V1, V3) des deux demi-ponts étant relié de façon commutable à la source de tension continue par l'intermédiaire d'un commutateur supplémentaire (V5),
- un premier circuit de commande susceptible de fermer l'un des commutateurs supérieurs (V1, V3) pendant une demi-onde du réseau de tension alternative et de fermer l'autre commutateur supérieur respectif (V1, V3) pendant une demi-onde suivante,
- un second circuit de commande susceptible d'effectuer une commutation synchronisée respective du commutateur inférieur (V2, V4) du demi-pont dont le commutateur supérieur (V3, V1) est ouvert dans la demi-onde concernée,
**caractérisé en ce que**
le commutateur supplémentaire (V5) est accouplé à un troisième circuit de commande susceptible d'effectuer une commutation synchrone avec le commutateur inférieur (V2, V4) se commutant de manière synchronisée dans la demi-onde concernée.

10. Onduleur conforme à la revendication 9,
**caractérisé en ce qu'**
une branche de pont du montage en pont (3) comporte au moins un étranglement (L1, L2).

11. Onduleur conforme à l'une des revendications 9 et 10,
**caractérisé en ce que**
les commutateurs (V1, V2, V3, V4) du montage en pont sont réalisés sous la forme de composants semi-conducteurs MOSFET.

12. Onduleur conforme à l'une des revendications 9 à 11,
**caractérisé en ce que**
le commutateur supplémentaire (V5) est réalisé sous la forme d'un composant semi-conducteur MOSFET.

13. Onduleur conforme à l'une des revendications 9 à 12,
**caractérisé en ce que**
le troisième circuit de commande est susceptible de produire des signaux de commande par l'intermédiaire d'une combinaison logique de signaux de commande du premier circuit de commande et du second circuit de commande.

14. Onduleur conforme à l'une des revendications 9 à 12,
**caractérisé en ce que**
le troisième circuit de commande est susceptible de produire des signaux de commande par l'intermédiaire d'une combinaison logique de signaux de commande du second circuit de commande.

15. Onduleur conforme à une des revendications 9 à 12,
**caractérisé en ce que**
l'onduleur est réalisé pour permettre une alimentation sans transformateur du réseau de tension alternative.
